# EUROPÄISCHE PATENTSCHRIFT

(11) **EP 0 911 498 B1**
(45) Veröffentlichungstag und Bekanntmachung des Hinweises auf die Patenterteilung: **25.10.2000**
(21) Anmeldenummer: 98116085.6
(22) Anmeldetag: 26.08.1998
(51) Int. Cl.: F01N 3/08, F01N 3/22, F02D 41/02

(54) **Verbrennungsmotoranlage mit Stickoxid-Speicherkatalysator und Betriebsverfahren hierfür**
Combustion engine system comprising a nitrogen oxide storage catalytic converter and operating process therefor
Système d'un moteur à combustion avec un catalyseur d' accumulation des oxydes d'azote et son procédé de mise en oeuvre

(30) Priorität: 25.10.1997 DE 19747222
(43) Veröffentlichungstag der Anmeldung: 28.04.1999
(73) Patentinhaber: DaimlerChrysler AG, 70567 Stuttgart (DE)
(72) Erfinder: Boegner, Walter, 71686 Remseck (DE); Karl, Günter, Dr., 73732 Esslingen (DE); Krutzsch, Bernd, Dr., 73770 Denkendorf (DE); Schön, Christof, Dr., 73630 Remshalden (DE); Voigtländer, Dirk, 70825 Korntal-Münchingen (DE); Wenninger, Günter, 70599 Stuttgart (DE)

(56) Entgegenhaltungen:
- WO-A-98/27322
- DE-A- 19 522 165
- US-A- 5 402 641
- US-A- 5 551 231

## Beschreibung

Die Erfindung bezieht sich auf eine Verbrennungsmotoranlage nach dem Oberbegriff des Anspruchs 1 sowie auf ein Verfahren zum Betrieb einer solchen Anlage. Anlagen dieser Art werden insbesondere in Kraftfahrzeugen eingesetzt. Sie enthalten eine Abgasreinigungsanlage, die neben eventuellen weiteren abgasreinigenden Komponenten einen Stickoxid(NOₓ) -Speicherkatalysator beinhaltet, um den Stickoxidausstoß zu minimieren. Dazu wird bekanntermaßen in Motorbetriebsphasen mit vermehrter Stickoxidbildung, z.B. bei magerem Motorluftverhältnis, d.h. oberhalb des stöchiometrischen Wertes liegendem Luft/Kraftstoff-Verhältnis, Stickoxid im Katalysator zwischengespeichert, z.B. durch einen Adsorptionsvorgang, um in einer hierfür geeigneten späteren Betriebsphase, z.B. bei fettem Motorluftverhältnis, d.h. unterhalb des stöchiometrischen Wertes liegendem Luft/Kraftstoff-Verhältnis, wieder freigesetzt und umgewandelt werden zu können, z.B. mittels eines entsprechenden Desorptionsvorgangs und anschließender Reduktion zu Stickstoff. Die Reduktionsreaktion kann in diesem oder einem anderen, im Abgasstrang liegenden Katalysator oder unter Abgasrückführung während der Desorptionsphasen in die Brennräume des Motors erfolgen.

Eine bekannte Schwierigkeit solcher Anlagen besteht darin, daß im Magerbetrieb des Motors Schwefeldioxid im Abgas enthalten ist, das durch Sulfatbildung zu einer Schwefelvergiftung des NOx-Speicherkatalysators führen kann, wobei der Schwefel aus dem Kraftstoff und/oder dem Motoröl herrühren kann. Eine solche Schwefelvergiftung hat zur Folge, daß die NOₓ-Speicherkapazität des Katalysators abnimmt.

In der Veröffentlichung W. Strehlau et al., "New Developments in Lean NOₓ Catalysis for Gasoline Fueled Passenger Cars in Europe", SAE 96 2047, 1996 ist die Möglichkeit der Desulfatisierung von dergestalt schwefelgealterten NOₓ-Speicherkatalysatoren beschrieben, d.h. die Befreiung derselben von vergiftendem Sulfat. Geeignete Bedingungen sind dabei erhöhte Abgastemperaturen von über 600°C und fette Abgaszusammensetzungen, d.h. ein unterhalb des stöchiometrischen Wertes liegendes Verhältnis von Sauerstoff bzw. Luft zu Kraftstoff bzw. unverbrannten Kohlenwasserstoffen in dem durch den Katalysator hindurchgeführten Abgas, nachfolgend als Katalysatorluftverhältnis bezeichnet.

In der Offenlegungsschrift EP 0 636 770 A1 ist eine Verbrennungsmotoranlage beschrieben, bei deren Betrieb ein vorhandener NOₓ-Speicherkatalysator periodisch Desulfatisierungsphasen unterzogen wird. Die Notwendigkeit einer jeweiligen Desulfatisierungsphase wird dort aus einer Erfassung der Dauer einer jeweiligen NOₓ-Regenerationsphase, d.h. einer Desorptionsphase des Katalysators ermittelt, die ihrerseits anhand des Meßsignals einer stromabwärts des NOₓ-Speicherkatalysators angeordneten Lambda-Sonde bestimmt wird. Letztere mißt das Luft/Kraftstoff-Verhältnis an dieser Stelle und damit das Katalysatorluftverhältnis an der Ausgangsseite des Katalysators. Dieses Verhältnis nimmt ab, sobald in einer Desorptionsphase kein Stickoxid mehr freigesetzt wird, da Darm die im Abgas enthaltenen unverbrannten Kohlenwasserstoffe nicht mehr als Reduktionsmittel für die Umsetzung von desorbiertem Stickoxid verbraucht werden. Bei konstantem Betriebspunkt ist die Regenerationsdauer proportional zur gespeicherten NOₓ-Masse, so daß direkt auf die gespeicherte NOₓ-Masse geschlossen werden kann. Andererseits läßt sich die in der Magerphase eingespeicherte NOₓ-Masse z.B. anhand eines Katalysatormodells und daraus die zugehörige theoretische Regenerationsdauer berechnen. Ist die gemessene Regenerationsdauer kürzer als die berechnete, läßt dies auf eine verminderte NOₓ-Speicherfähigkeit des Katalysators durch Schwefelvergiftung und daher auf eine notwendige Desulfatisierungsphase schließen. Alternativ kann die Schwefelalterung des NOₓ-Speicherkatalysators auch mit einem NOₓ-Sensor stromabwärts des Katalysators festgestellt werden. Steigt dort die NOₓ-Konzentration während einer Adsorptionsphase sehr rasch an, deutet dies auf eine verminderte NOₓ-Speicherfähigkeit hin. Zur Durchführung der Desulfatisierung wird in der genannten EP 0 636 770 A1 vorgeschlagen, den Verbrennungsmotor von magerem auf fettes Motorluftverhältnis umzustellen und bei Bedarf zusätzlich eine dem NOₓ-Speicherkatalysator zu diesem Zweck zuzuordnende, elektrische Heizeinrichtung zu aktivieren. Denn bekanntermaßen ist die Motorabgastemperatur umso geringer, je fetter das dem Motor zugeführte Luft/Kraftstoff-Gemisch ist. Die Desulfatisierungsphase wird für etwa 10 Minuten beibehalten.

Eine Verbrennungsmotoranlage der eingangs genannten Art ist in der Offenlegungsschrift DE 195 22 165 A1 offenbart. Zur Durchführung der Desulfatisierungsphasen wird dort ein fetteres Motorluftverhältnis und ein späterer Zündzeitpunkt für den jeweiligen Motorzylinder eingestellt, und außerdem wird dem Abgas stromaufwärts des NOₓ-Speicherkatalysators Sekundärluft zugeführt. Die Desulfatisierungsphasen werden von einer Motorregelungsvorrichtung gesteuert, wobei dies vorzugsweise so erfolgt, daß die von einem entsprechenden Temperatursensor erfaßte Katalysatortemperatur durch geeignete Einstellung des Motorluftverhältnisses und des Zündzeitpunktes auf einen gewünschten, erhöhten Sollwert eingeregelt wird. Dazu werden jeweils ein Teil der Zylinder fett und die übrigen Zylinder mager betrieben, wobei die Ansaugluftmenge für die Zylinder mit fettem Verbrennungsbetrieb geeignet erhöht wird. Ein Absinken der Motorleistung soll dabei verhindert werden. Die Desulfatisierungsphase wird jeweils für eine vorgebbare Zeitdauer aufrechterhalten.

Der Erfindung liegt als technisches Problem die Bereitstellung einer Verbrennungsmotoranlage der eingangs genannten Art sowie eines Betriebsverfahrens hierfür zugrunde, bei denen eine periodische Desulfatisierung des NOₓ-Speicherkatalysators im laufenden Motorbetrieb mit möglichst geringer Beeinflussung des Motorbetriebszustands möglich ist.

Die Erfindung löst dieses Problem durch die Bereitstellung einer Verbrennungsmotoranlage mit den Merkmalen des Anspruchs 1 sowie eines Betriebsverfahrens hierfür mit den Merkmalen des Anspruchs 4.

Bei der Verbrennungsmotoranlage nach Anspruch 1 umfassen die Desulfatisierungsmittel Mittel zur Sekundärlufteinspeisung in den Nox-Speicherkatalysator. Der in der Sekundärluft enthaltene Sauerstoff reagiert exotherm mit einem Teil der im Abgas enthaltenen Reduktionsmittel, wie unverbrannten Kohlenwasserstoffen, Wasserstoff und Kohlenmonoxid, wodurch der Katalysator auf die zur Desulfatisierung, d.h. Sulfatregeneration, optimale, erhöhte Temperatur gebracht werden kann, ohne daß hierzu eine zusätzliche Beheizung von außen mittels einer elektrischen Heizeinrichtung oder dergleichen notwendig ist oder vom Motor selbst entsprechend hohe Abgastemperaturen bereitgestellt werden müssen. Des weiteren beinhaltet die Verbrennungsmotoranlage eine stromabwärts des NOₓ-Speicherkatalysators angeordnete Lambda-Sonde zur Erfassung des Katalysatorluftverhältnisses. Dementsprechend wird gemäß dem Verfahren nach Anspruch 4 während der Desulfatisierungsphasen der Verbrennungsmotor mit fettem Motorluftverhältnis betrieben, um eine ausreichende Menge von Reduktionsmitteln im Abgas bereitzustellen, und gleichzeitig Sekundärluft in den NOₓ-Speicherkatalysator zudosiert, wobei wenigstens die Information von der stromabwärts des NOₓ-Katalysators angeordneten Lamba-Sonde zur Einstellung des Motorluftverhältnisses und der Sekundärluftzufuhrrate herangezogen wird.

Bei einer nach Anspruch 2 weitergebildeten Anlage ist ein Temperatursensor zur Erfassung der Temperatur des NOₓ-Speicherkatalysators bzw. des durch ihn hindurchgeleiteten Abgases vorgesehen. Diese Temperaturinformation kann für die Bestimmung des einzustellenden Motorluftverhältnisses und/oder der einzustellenden Sekundärluftzufuhrrate und damit des Katalysatorluftverhältnisses auf je nach Bedarf unterschiedliche Weise herangezogen werden, z.B- als reine Schutzmaßnahme vor einer Überhitzung des Katalysators oder gemäß einer Alternative des nach Anspruch 6 weitergebildeten Verfahrens zur Einregelung eines vorgebbaren Temperatursollwertes durch entsprechende Einstellung des Motorluftverhältnisses und/oder der Sekundärluftzufuhrrate.

Die Möglichkeit der laufenden Überwachung des Istwertes des Katalysatorluftverhältnisses durch die Lambda-Sonde stromabwärts des NOₓ-Katalysators kann in einem nach Anspruch 5 weitergebildeten Verfahren dazu genutzt werden, das Katalysatorluftverhältnis durch variable Einstellung des Motorluftverhältnisses und/oder der Sekundärluftzufuhrrate auf einen vorgebbaren, zur Desulfatisierung des Katalysators optimalen Sollwert einzuregeln.

Eine nach Anspruch 3 weitergebildete Anlage beinhaltet eine elektrisch ansteuerbare Drosselklappe im Motoransaugtrakt, die von der Desulfatisierungssteuerung, die beispielsweise in ein zentrales Motorsteuergerät integriert sein kann, ansteuerbar ist. Dies wird bei einem nach Anspruch 6 weitergebildeten Verfahren dazu genutzt, die Drosselklappe während der Desulfatisierungsphasen variabel so einzustellen, daß der Verbrennungsmotor unabhängig vom Verlauf des Desulfatisierungsvorgangs ein gewünschtes Drehmoment erzeugt. Auf diese Weise bleibt die Leistungsabgabe des Motors und damit im Fall des Einsatzes in einem Kraftfahrzeug der Fahrzustand des Fahrzeugs unbeeinflußt vom Vorliegen und Verlauf einer jeweiligen Desulfatisierungsphase.

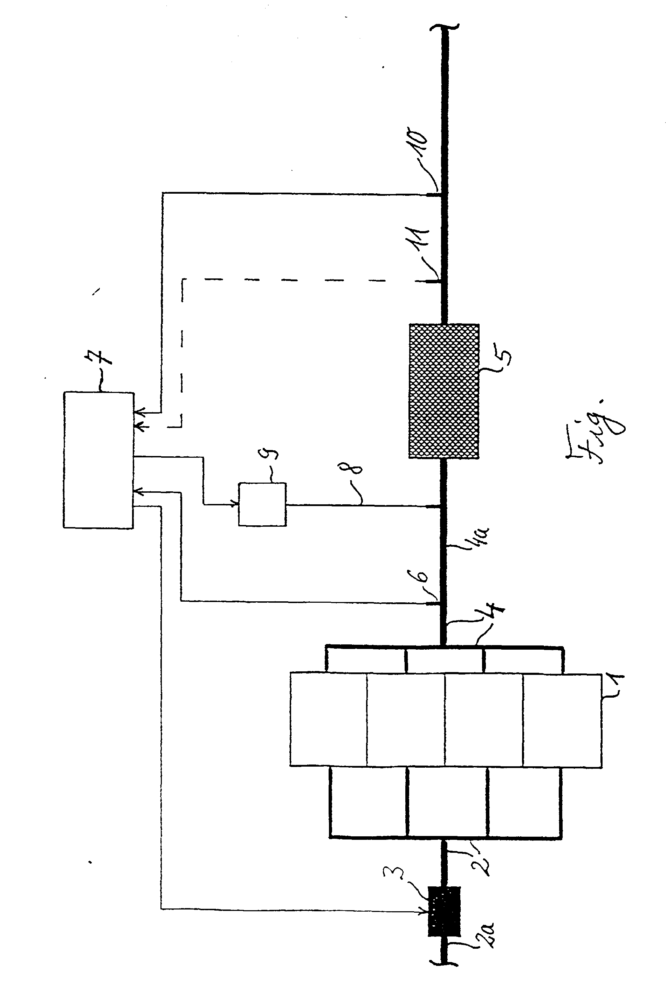

Vorteilhafte Ausführungsformen der Erfindung sind in der Zeichnung dargestellt und werden nachfolgend beschrieben.

Die einzige Figur zeigt ein Blockdiagramm einer Verbrennungsmotoranlage mit einer Abgasreinigungsanlage mit NOₓ-Speicherkatalysator und zugehörigen Desulfatisierungsmitteln.

Die gezeigte Verbrennungsmotoranlage beinhaltet einen mehrzylindrigen Verbrennungsmotor 1 mit einem Ansaugtrakt 2 und einer elektrisch ansteuerbaren Drosselklappe 3, die in einem allen Zylindern gemeinsamen Saugrohrleitungsabschnitt 2a des Ansaugtraktes 2 angeordnet ist. Ausgangsseitig schließt sich an den Verbrennungsmotor 1 ein Abgasstrang 4 an, bei dem die aus den einzelnen Zylindern abgehenden Abgasauslaßleitungen in eine gemeinsame Abgashauptleitung 4a münden. Dem Abgasstrang 4 ist eine Abgasreinigungsanlage zugeordnet, die einen in der Abgashauptleitung 4a angeordneten Stickoxid-Speicherkatalysator 5 sowie ggf. einen oder weitere, hier nicht näher interessierende und daher nicht gezeigte Katalysatoren beinhaltet. Der NOₓ-Speicherkatalysator 5 ist von herkömmlicher Bauart und dient dazu, im Abgas enthaltene Stickoxide periodisch zu adsorbieren und zwecks Konvertierung wieder zu desorbieren. Stromaufwärts des NOₓ-Speicherkatalysators 5 ist eine erste Lambda-Sonde 6 in die Abgashauptleitung 4a eingebracht, um dort das Luft/Kraftstoff-Verhältnis zu messen und dadurch das Motorluftverhältnis zu erfassen. Das Ausgangssignal der Lambda-Sonde 6 ist einem Motorsteuergerät 7 zugeführt, das u.a. die Drosselklappe 3 ansteuert. Außerdem steuert es in nicht näher gezeigter Weise die Kraftstoffeinspritzung in den Verbrennungsmotor 1 und ist dadurch in der Lage, den über die Lambda-Sonde 6 erfaßten Istwert des Motorluftverhältnisses auf einen gewünschten Sollwert einzuregeln.

Um bei Bedarf von Zeit zu Zeit den NOₓ-Speicherkatalysator 5 von vergiftendem Sulfat befreien zu können, beinhaltet die Verbrennungsmotoranlage entsprechende Desulfatisierungsmittel. Diese bestehen zum einen aus Sekundärluftzuführungsmitteln in Form einer sekundärluftleitung 8 und einer zugehörigen Sekundärluftpumpe 9 sowie einer Desulfatisierungssteuerung, die in das Motorsteuergerät 7 integriert ist, d.h. das Motorsteuergerät 7 steuert auch die Sulfatregenerierungsvorgänge für den NOₓ-Speicherkatalysator 5. Dazu ist u.a. auch die Sekundärluftpumpe 9 vom Motorsteuergerät 7 ansteuerbar. Die Sekundärluftleitung 8 mündet zwischen der Lambda-Sonde 6 und dem NOₓ-Speicherkatalysator 5 in die Abgashauptleitung 4a. Des weiteren ist stromabwärts des NOₓ-Speicherkatalysators 5 ein Temperatursensor 10 in die Abgashauptleitung 4a eingebracht, um dort die Abgastemperatur zu messen und dadurch die Temperatur im NOₓ-Speicherkatalysator 5 zu erfassen. Das Ausgangssignal des Temperatursensors T ist ebenfalls dem Motorsteuergerät 7 zugeführt. Optional ist, wie in der Fig. gestrichelt angedeutet, stromabwärts des NOₓ-Speicherkatalysators 5 eine zweite Lambda-Sonde 11 in die Abgashauptleitung 4a eingebracht, deren Ausgangssignal ebenfalls dem Motorsteuergerät 7 zugeführt ist. Mit der so positionierten zweiten Lambda-Sonde 11 läßt sich das dortige Luft/Kraftstoff-Verhältnis messen und damit das Luft/Kraftstoff-Verhältnis im NOₓ-Speicherkatalysator 5, d.h. das Katalysatorluftverhältnis, erfassen.

Die solchermaßen aufgebaute Verbrennungsmotoranlage läßt sich durch ein Verfahren betreiben, das sich durch spezielle periodische Desulfatisierungsphasen auszeichnet, wie dies im folgenden näher erläutert wird, während der übrige Anlagenbetrieb in einer üblichen Weise erfolgt, auf die hier nicht näher eingegangen zu werden braucht. Insbesondere wird der NOₓ-Speicherkatalysator 5 alternierend im Adsorptions- und Desorptionsbetrieb gefahren, um im Magerbetrieb des Motors Stickoxide zu adsorbieren und diese in Motorbetriebsphasen mit fetterem Gemisch wieder zu desorbieren, so daß sie im Katalysator 5 selbst oder auf andere Weise, z.B. durch Abgasrückführung in den Ansaugtrakt, konvertiert werden können. Wenn nun durch Sulfatbildung aufgrund von im Abgas enthaltenem Schwefeldioxid der NOₓ-Speicherkatalysator 5 eine merkliche Schwefelalterung, d.h. Schwefelvergiftung, erfährt, vermindert sich seine NOₓ-Speicherfähigkeit mit der Folge, daß die NOₓ-Konzentration stromabwärts des Katalysators 5 während der Adsorptionsphasen vergleichsweise rasch ansteigt, was in nicht gezeigter Weise durch einen dort positionierten NOₓ-Sensor detektiert werden kann. Außerdem verkürzt sich die Regenerationsdauer des NOₓ-Speicherkatalysators 5, d.h. die Dauer der Desorptionsphasen, was z.B. mit einer stromabwärts des NOₓ-Speicherkatalysators 5 angeordneten Lambda-Sonde, wie der gezeigten zweiten Lambda-Sonde 11, erfaßt werden kann, wie oben erläutert.

Sobald nun die Desulfatisierungssteuerung, d.h. das Motorsteuergerät 7, auf die eine oder andere geeignete Weise feststellt, daß der NOₓ-Speicherkatalysator 5 eine merkliche Schwefelvergiftung zeigt, wird eine Desulfatisierungsphase aktiviert. Dazu regelt das Motorsteuergerät 7 durch entsprechende Kraftstoffeinspritzung und Rückkopplung des Istwertes des Motorluftverhältnisses über das Ausgangssignal der ersten Lambda-Sonde 6 für den Motor 1 ein ausreichend fettes Luft/Kraftstoff-Gemisch ein. Gleichzeitig paßt sie unabhängig von diesem durch den Desulfatisierungsprozeß bestimmten Motorluftverhältnis das vom Motor abgegebene Drehmoment dem jeweils geforderten Sollwert an, indem sie die elektronische Drosselklappe 3 entsprechend ansteuert. Gleichzeitig veranlaßt das Motorsteuergerät 7 durch Aktivierung der Sekundärluftpumpe 9 die Zudosierung von Sekundärluft über die Sekundärluftleitung 8 in die Abgashauptleitung 4a, wozu am Auslaß der Sekundärluftleitung 8 eine geeignete Dosiereinrichtung vorgesehen ist.

Auf diese Weise gelangen in den NOₓ-Speicherkatalysator 5 zum einen im Abgas des fett betriebenen Motors 1 enthaltene Reduktionsmittel, insbesondere unverbrannte Kohlenwasserstoffe, Wasserstoff und/oder Kohlenmonoxid, und zum anderen der in der Sekundärluft enthaltene Luftsauerstoff, mit dem ein Teil der Reduktionsmittel auf der Katalysatoroberfläche reagiert. Durch diese Reaktion wird eine hohe Wärmemenge freigesetzt, die zur gewünschten Erwärmung des NOₓ-Speicherkatalysators 5 führt und damit die Verringerung der Abgastemperatur aufgrund der Umstellung auf fetten Motorbetrieb mehr als kompensiert. Das Katalysatorluftverhältnis ergibt sich dabei aus dem Motorluftverhältnis und der von der Sekundärluftpumpe 9 zudosierten Luftmenge. Dieses Luftverhältnis im NOₓ-Speicherkatalysator 5 wird mit der zweiten Lambda-Sonde 11 gemessen, wenn diese vorhanden ist.

Für einen optimalen Ablauf des Desulfatisierungsvorgangs regelt das Motorsteuergerät 7 als Desulfatisierungssteuerung das Motorluftverhältnis und den Sekundärluftstrom in Abhängigkeit von den Ausgangssignalen der zweiten Lambdasonde 11, falls vorhanden, und dem Temperatursensor 10 derart, daß im NOₓ-Speicherkatalysator 5 ein fettes Luftverhältnis und eine ausreichend hohe Temperatur vorliegen. Eine Möglichkeit ist dabei, die Sekundärluftmenge konstant zu lassen und das Motorluftverhältnis der Sekundärluftmenge so anzupassen, daß sich das für den Desulfatisierungsprozeß gewünschte Katalysatorluftverhältnis einstellt. Als zweite Möglichkeit kann eine variable Sekundärluftmenge vorgesehen werden, d.h. einen regelbaren Sekundärluftstrom. Die zudosierte Sekundärluftmenge wird dann dem Motorluftverhältnis so angepaßt, daß wiederum das gewünschte, fette Luftverhältnis im NOₓ-Speicherkatalysator 5 entsteht.

Bei Vorhandensein der zweiten Lambda-Sonde 11 kann das Katalysatorluftverhältnis direkt bestimmt und über die dadurch gegebene Rückkopplung auf einen für die Sulfatzersetzung optimalen Wert geregelt werden, vorzugsweise zwischen etwa 0,75 und 0,99. Gleichzeitig läßt sich mit Hilfe des Temperatursensors 10 eine optimale Temperatur für die Sulfatzersetzung einregeln, wobei vorzugsweise eine Temperatur von mehr als 550°C gewählt wird. Zudem ist während des Desulfatisierungsprozesses durch den Temperatursensor 10 ein Schutz vor einer schädlichen Katalysatorüberhitzung einstellbar. Die eingebrachte Menge an Reduktionsmitteln, die eine Funktion des Motorluftverhältnisses ist, und die über die Sekundärluft eingebrachte Sauerstoffmenge können somit von der Desulfatisierungssteuerung 7 so eingestellt werden, daß optimale Sulfatzersetzungsbedingungen im NOₓ-Speicherkatalysator 5 während der jeweiligen Desulfatisierungsphase vorliegen.

Bei Anlagen ohne die zweite Lambda-Sonde 11 wird das Katalysatorluftverhältnis gesteuert statt geregelt. Bei konstantem Sekundärluftstrom kann das Luftverhältnis im NOₓ-Speicherkatalysator 5 dann über eine Regelung des Motorluftverhältnisses gesteuert werden. Auch bei dieser vereinfachten Variante der Desulfatisierung ist mittels des Temperatursensors 10 ein Schutz vor einer Katalysatorüberhitzung realisierbar.

Sobald das Sulfat im NOₓ-Speicherkatalysator 5 durch den Desulfatisierungsvorgang im wesentlichen vollständig zersetzt wurde, was durch sensorische Erfassung der an der Zersetzungsreaktion beteiligten Reaktionspartner festgestellt oder durch eine ausreichend lange Dauer der Desulfatisierungsphase sichergestellt werden kann, wird die Verbrennungsmotoranlage wieder in ihren üblichen Betrieb umgestellt, in welchem der NOₓ-Speicherkatalysator 5 alternierend im Adsorptions- und Desorptionsbetrieb gefahren wird. Es sei angemerkt, daß bei einem Einsatz der Verbrennungsmotoranlage in einem Kraftfahrzeug die periodische Durchführung der Desulfatisierungsphasen keinerlei nachteiligen Einfluß auf den Fahrzustand des Fahrzeugs hat, da das Motorsteuergerät 7, wie oben gesagt, das Motordrehmoment durch entsprechende Ansteuerung der elektronischen Drosselklappe 3 unabhängig vom gewählten Motorluftverhältnis an den jeweiligen Fahrerwunsch anpaßt. Die Desulfatisierungsphasen können daher ohne Minderung des Fahrkomforts im laufenden Fahrbetrieb aktiviert werden.

## Patentansprüche

1. Verbrennungsmotoranlage, insbesondere für ein Kraftfahrzeug, mit
- einem Verbrennungsmotor (1) mit zugehörigem Motorabgasstrang (4),
- einer Abgasreinigungsanlage mit einem im Motorabgasstrang angeordneten NOₓ-Speicherkatalysator (5),
- einer Lambda-Sonde (6) zur Erfassung des Motorluftverhältnisses und
- Mitteln zur periodischen Desulfatisierung des NOₓ-Speicherkatalysators bei erhöhter Temperatur und fettem Katalysatorluftverhältnis, wobei die Desulfatisierungsmittel eine Desulfatisierungssteuerung (7) und Sekundärluftzuführungsmittel (8, 9) zur Einspeisung von Sekundärluft in den NOₓ-Speicherkatalysator (5) umfassen,
**dadurch gekennzeichnet, daß**
- eine stromabwärts des NOₓ-Speicherkatalysators (5) angeordnete Lambda-Sonde (11) zur Erfassung des Katalysatorluftverhältnisses vorgesehen ist und
- die Desulfatisierungssteuerung (7) den Desulfacisierungsvorgang wenigstens in Abhängigkeit vom Ausgangssignal dieser Lambda-Sonde (11) regelt.

2. Verbrennungsmotoranlage nach Anspruch 1, weiter
**gekennzeichnet durch**
einen im NOₓ-Abgaskatalysator (5) oder stromabwärts desselben im Motorabgasstrang (4) angeordneten Temperatursensor (10) zur Erfassung der Temperatur im NOₓ-Speicherkatalysator.

3. Verbrennungsmotoranlage nach einem der Anspruch 1 oder 2, weiter
**gekennzeichnet durch**
eine von der Desulfatisierungssteuerung (7) elektrisch ansteuerbare Motoransaugtrakt-Drosselklappe (3).

4. Verfahren zum Betrieb einer Verbrennungsmotoranlage nach einem der Ansprüche 1 bis 3, bei dem periodisch Desulfatisierungsphasen des NOₓ-Speicherkatalysators (5) bei erhöhter Temperatur und fettem Luftverhältnis desselben durchgeführt werden, wobei während der Desulfatisierungsphasen der Verbrennungsmotor, (1) mit fettem Motorluftverhältnis betrieben und über die Sekundärluftzuführungsmittel (8, 9) Sekundärluft in den NOₓ-Speicherkatalysator zudosiert wird und die Desulfatisierungssteuerung (7) das Motorluftverhältnis und die Sekundärluftzufuhrrate wenigstens in Abhängigkeit vom Ausgangssignal der stromabwärts des NOₓ-Speicherkatalysators (5) angeordneten Lambda-Sonde (11) einstellt.

5. Verfahren nach Anspruch 4, weiter
**dadurch gekennzeichnet, daß**
das Motorluftverhältnis, das Katalysatorluftverhältnis und/oder die Katalysatortemperatur sensorisch erfaßt und durch variable Einstellung des Motorluftverhältnisses und/oder der Sekundärluftzufuhrrate auf vorgebbare Sollwerte eingeregelt werden.

6. Verfahren nach Anspruch 4 oder 5 zum Betrieb einer Verbrennungsmotoranlage nach Anspruch 3, weiter
**dadurch gekennzeichnet, daß**
die Motoransaugtrakt-Drosselklappe (3) während der Desulfatisierungsphasen derart angesteuert wird, daß der Verbrennungsmotor (1) unabhängig vom für die jeweilige Desulfatisierungsphase gewählten Motorluftverhältnis ein gefordertes Drehmoment abgibt.

## Claims

1. An internal combustion engine system, in particular for a motor vehicle, comprising
- an internal combustion engine (1) operating in conjunction with an engine exhaust gas train (4),
- an exhaust gas cleaning system having a NOₓ storage catalytic converter (5) in the engine exhaust gas train,
- a lambda sensor (6) for detecting the engine air ratio and
- means for periodically desulfating the NOₓ storage catalytic convertor when the catalytic converter is at high temperature and the air ratio rich, the desulfation means comprising a desulfation control unit (7) and secondary air feed means (8, 9) for delivering secondary air to the NOₓ storage catalytic converter (5),
**characterised in that**
- a lambda sensor (11) is provided downstream of the NOₓ storage catalytic converter (5) for detecting the catalytic converter air ratio and
- the desulfation control unit (7) regulates the desulfation process at least depending on the output signal of this lambda sensor (11).

2. An internal combustion engine system as claimed in claim 1, further
**characterised by**
a temperature sensor (10) arranged in the NOₓ exhaust gas catalytic converter (5) or downstream thereof in the engine exhaust gas train (4) for detecting the temperature in the NOₓ storage catalytic convertor.

3. An internal combustion engine system as claimed in claim 1 or 2, further
**characterised by**
an engine intake duct-throttle valve (3) which can be electrically activated by the desulfation control unit (7).

4. A method of operating an internal combustion engine system as claimed in one of claims 1 to 3, whereby periodic desulfation phases of the NOₓ storage catalytic converter (5) are periodically operated when the temperature therein is high and the air ratio rich, and, during the desulfation phases, the internal combustion engine (1) is operated with a rich engine air ratio and secondary air is metered and delivered to the NOₓ storage catalytic converter via the secondary air delivery means (8, 9) and the desulfation control unit (7) adjusts the engine air ratio and the secondary air delivery rate at least depending on the output signal of the lambda sensor (11) arranged downstream of the NOₓ storage catalytic converter (5).

5. A method as claimed in claim 4, further
**characterised in that**
the engine air ratio, the catalytic converter air ratio and/or the catalytic converter temperature are sensor-detected and regulated to predeterminable desired values by variably adjusting the engine air ratio and/or the secondary air delivery rate.

6. A method as claimed in claim 4 or 5 for operating an internal combustion engine system as claimed in claim 3, further
**characterised in that**
during the desulfation phases, the engine intake duct-throttle valve (3) is controlled so that the internal combustion engine (1) produces a required torque irrespective of the engine air ratio selected for the respective desulfation phase.

## Revendications

1. Installation de moteur de combustion interne, en particulier pour un véhicule automobile, comprenant :
- un moteur à combustion interne (1) équipé d'un système de gaz d'échappement moteur (4) afférent,
- une installation d'épuration des gaz d'échappement ayant un catalyseur accumulateur de NOₓ (5) placé dans le système de gaz d'échappement moteur;
- une sonde lambda (6) pour appréhender le rapport d'air moteur, et
- des moyens pour désulfater périodiquement le catalyseur accumulateur de NOₓ à température élevée et avec un rapport d'air au -catalyseur riche, les moyens de désulfatation comprenant une commande de désulfatation (7) et des moyens d'amenée d'air secondaire (8, 9) pour injecter de l'air secondaire dans le catalyseur accumulateur de NOₓ (5),
caractérisé en ce qu'
- une sonde lambda (11) disposée en aval du catalyseur accumulateur de NOₓ (5) est prévue pour appréhender le rapport d'air au catalyseur, et
- la commande de désulfatation (7) régule le processus de désulfatation au moins en fonction du signal de sortie venant de cette sonde lambda (11).

2. Installation de moteur à combustion interne selon la revendication 1, caractérisée en outre par un capteur de température (10), disposé dans le catalyseur de gaz d'échappement pour NOₓ (5) ou bien en aval de celui-ci dans le système d'échappement de gaz d'échappement moteur (4), afin d'appréhender la température régnant dans le catalyseur accumulateur de NOₓ.

3. Installation de moteur à combustion interne selon l'une des revendications 1 ou 2, caractérisée en outre par un clapet d'étranglement de système d'aspiration moteur (3) pouvant être commandé électriquement par la commande de désulfatation (7).

4. Procédé selon de fonctionnement d'une installation de moteur à combustion interne selon l'une des revendications 1 à 3, pour lequel des phases de désulfatation du catalyseur accumulateur de NOₓ (5) sont conduites à température élevée et avec un rapport d'air riche de celui-ci, où, pendant les phases de désulfatation du moteur à combustion interne (1), le fonctionnement se fait avec un rapport d'air moteur riche et, par l'intermédiaire des moyens d'amenée en air secondaire (8, 9), de l'air secondaire est amené de façon dosée dans le catalyseur stockeur de NOₓ, et la commande de désulfatation (7) règle le rapport d'air moteur et le taux d'apport en air secondaire, au moins en fonction du signal de sortie fourni par la sonde lambda (11) installée en aval du catalyseur accumulateur de NOₓ (5).

5. Procédé selon la revendication 4, caractérisé en outre par le fait que le rapport d'air moteur, le rapport d'air au catalyseur et/ou la température au catalyseur sont appréhendées par de la sensorique et sont réglés à des valeurs de consigne susceptibles d'être prédéterminées, par un réglage variable du rapport d'air moteur et/ou du taux d'apport en air secondaire.

6. Procédé selon la revendication 4 ou 5, pour le fonctionnement d'une installation de moteur à combustion interne selon la revendication 3, caractérisé en outre par le fait que le clapet d'étranglement de système d'aspiration moteur (3) est commandé, pendant les phases de désulfatation, de manière que le moteur à combustion interne (1) fournisse un couple requis, indépendamment du rapport d'air moteur sélectionné pour la phase de désulfatation respective.
